# EUROPÄISCHE PATENTSCHRIFT

(11) **EP 4 387 939 B1**
(45) Veröffentlichungstag und Bekanntmachung des Hinweises auf die Patenterteilung: **30.04.2025**
(21) Anmeldenummer: 22761395.7
(22) Anmeldetag: 29.07.2022
(51) Int. Cl.: C03B 9/193, C03B 9/38, C03B 9/41

(54) **VORFORMBODEN-PRESS-SYSTEM ZUR AUSBILDUNG EINES GRATFREIEN MÜNDUNGSEINGANGS EINES ZU FERTIGENDEN GLASBEHÄLTERS SOWIE EIN VERFAHREN ZUR HERSTELLUNG EINES KÜLBELS VERMITTELS DESSEN**
BLANK MOULD BASE PRESSING SYSTEM FOR FORMING A BURR-FREE MOUTH ENTRY OF A GLASS CONTAINER TO BE PRODUCED, AND METHOD FOR PRODUCING A PARISON BY MEANS SAID SYSTEM
SYSTÈME DE PRESSAGE DE BASE DE MOULE ÉBAUCHEUR POUR FORMER UNE ENTRÉE D'EMBOUCHURE SANS BAVURE D'UN RÉCIPIENT EN VERRE À PRODUIRE, ET PROCÉDÉ DE FABRICATION D'UNE PARAISON AU MOYEN DUDIT SYSTÈME

(30) Priorität: 20.08.2021 DE 102021004257
(43) Veröffentlichungstag der Anmeldung: 26.06.2024
(73) Patentinhaber: Gerresheimer Glas GmbH, 40468 Düsseldorf (DE)
(72) Erfinder: AMRHEIN, Philipp, 97833 Frammersbach (DE); KOHL, Andreas, 97816 Lohr am Main (DE)
(74) Vertreter: Springorum, Harald
(86) Internationale Anmeldenummer: PCT/DE2022/150001
(87) Internationale Veröffentlichungsnummer: WO 2023/020667

(56) Entgegenhaltungen:
- EP-A2- 0 197 427
- DE-A1- 2 010 443
- DE-C1- 3 232 288

## Beschreibung

Die vorliegende Erfindung betrifft ein Vorformboden-Press-System zur Ausbildung eines gratfreien Mündungseingangs eines zu fertigenden Glasbehälters sowie ein Verfahren zur Herstellung eines Külbels vermittels dessen.

Bei Vorformboden-Press-Systemen, insbesondere im Enghalspreßverfahren zur zylindrischen Ausführung des Mündungsinnenverlaufes entsteht bei der Fertigung nach dem Stand der Technik häufig eine Gratbildung am Mündungseingang.

So zeigt etwa die EP 0 327 240 A1 eine Vorrichtung (vgl. dort etwa Fig. 1) für ein Pressblasverfahren bei sogenannten IS (*Individual Section*) Glasformmaschinen. Hierbei wird die Arbeitsendstellung des Pressstempels durch den Verformungswiderstand des geschmolzenen Glases in der Vorform bestimmt, wenn die Vorformausnehmung vollständig mit Glas gefüllt ist. Sie hängt damit von der Masse des Glastropfens und/oder dem Volumen der Vorformausnehmung ab. Aufgrund der Gewichtsschwankungen des Glastropfens erreicht hier die Arbeitsendstellung damit jeweils unterschiedliche Endpositionen.

Der Preßstempel ist in seinem Design an seiner Führung zu der Mündungsform leicht konisch bis fast zylindrisch gestaltet. Gegen Ende des Pressvorganges, dann wenn der Preßstempel seine Arbeitsendstellung nahezu erreicht hat, wird dieser durch einen nicht längsgeteilten Führungsring radial geführt und zentriert. Wegen des Führungsspiels bzw. Spalts zwischen Führungsring und Pressstempel und der leichten Konizität des Pressstempels in diesem Bereich kann in bestimmten Betriebssituationen Glasmasse in den Spalt gelangen, wobei die Spaltgröße abhängig von der jeweiligen Arbeitsendstellung des Pressstempels ist. Dies kann ungünstigerweise zu scharfkantigen Formnähten, einer sogenannten Gratbildung führen, die die Dichtwirkung bzw. Montagebedingungen zwischen Glasbehälterverschluss und Glasbehälter verschlechtern sowie innerhalb des Mündungseinganges dichtende und somit vorgespannte Verschlüsse oder Einsätze beschädigen und große vertikale Eindrückkräfte bewirken können.

Bei einer weiteren aus dem Stand der Technik bekannten Vorrichtung nach der EP 1 129 039 B1, die den vorbeschriebenen Nachteil nach der Lehre der EP 0 327 240 A1 zu meiden sucht, besteht die Mündungsform aus einem längsgeteilten Mündungswerkzeug und einem in einer Radialnut des Mündungswerkzeugs gehaltenen, nicht längsgeteilten Führungsring, der den Preßstempel axial führen soll. Im Preßstempel ist dort das Glaskontkaktprofil des äußeren Dichtungsrandes der Mündung integriert und enthält demnach keine Formteilung zwischen Pressstempel und Führungsring. Die Arbeitsendstellung des Preßstempels ist dadurch definiert, daß eine obere Ringfläche des Preßstempels zur Anlage an einer ringförmigen Gegenfläche des Mündungswerkzeuges kommt.

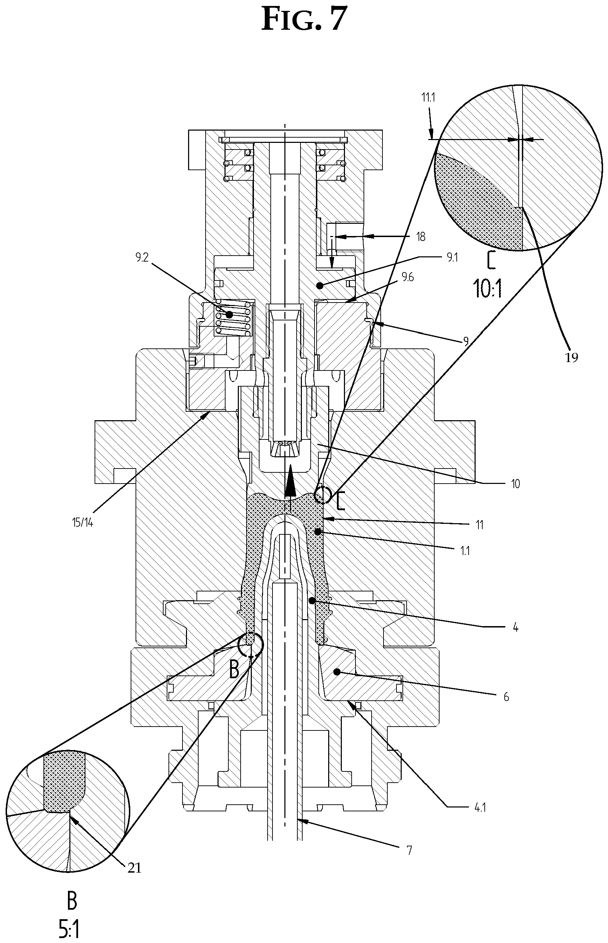

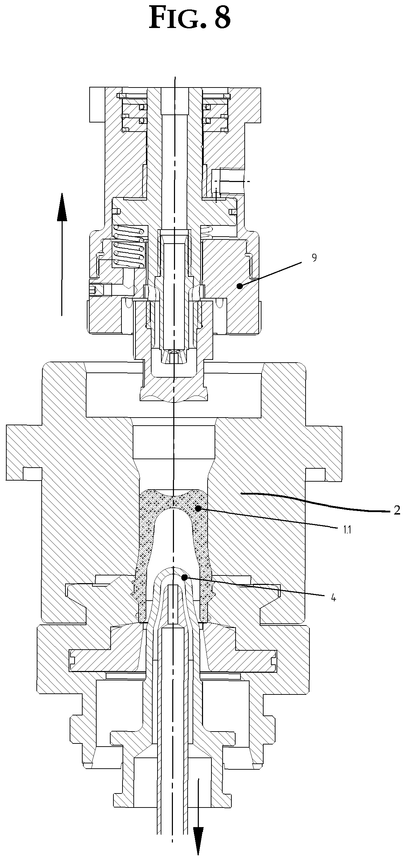

Auf diese Weise wird zwar der Nachteil der EP 0 327 240 A1 mit ihrer jeweils von der Masse des Glastropfens abhängigen Endstellung des Preßstempels und der daraus resultierenden problematischen Gratbildung im Mündungsinnenbereich des Külbels (und späteren Glasbehälters) vermieden, dies freilich um den Preis eines dort dann fehlenden Masseausgleiches zur Kompensation der Masseschwankungen des Glastropfens, was infolgedessen wiederum zu Problemen bei der Qualität im Hinblick auf die Ausbildung der Vorformbodennaht führen kann, etwa wenn sich die Glasmasse infolge eines zu großen massereichen Glastropfens dann zu sehr in den Spalt zwischen Külbel und Vorformwandung im Bereich des Külbelbodens, also des späteren Glasbehälterbodens quetscht und dort dann eine zu ausgeprägte Naht ausbildet, die sich in der Fertigformung nicht mehr zu einem Glasbehälterboden hinreichender Qualität ausformen läßt. Dies kann nach der Lehre der EP 1 129 039 B1 geschehen, da dort der Druck mit dem der Kolben, der das Preßelement zur Vorformung des Bodens in die Glasmasse treibt, nur beaufschlagt oder eben nicht beaufschlagt, nicht jedoch hinsichtlich seiner Größenordnung eingestellt werden kann (vgl. dort Ventile in Fig. 7 und 8 nebst Erläuterungen hierzu) und das Preßelement dort damit immer mit diesem vorgegebenen Druck gegen den Glastropfen in der Vorform fährt. Ist dieser Druck bei zu großer Masse des Glastropfens zu hoch, so kann es infolge der Inkompressibilität des flüssigen Glases zu dem vorerwähnten zu starken Eindringen des Glases in den Spalt zwischen Külbel und Vorformwandung im Bereich des Külbelbodens kommen, da die Glasmasse hier nicht mehr nach unten am fest anliegenden Stempel ausweichen kann und auch nicht soll.

Die DE 32 32 288 C1 versucht ein zu Anfang des Formungsvorgangs fest eingestelltes Zusatzvolumen zum Ausgleich von Masseschwankungen zu nutzen und setzt darüberhinaus eine Druckluftsteuerung ein, um die thermische Belastung des Kolbens zu verringern. Der Kolbenhub selbst ist hier jedoch genau wie das bereits erwähnte Zusatzvolumen fest vorgegeben und nur vom Betriebszyklus beeinflußt.

Zur Minderung der thermischen Belastung - in diesem Falle des Kolbens - setzt die EP 0 197 427 A1 durch Kanäle geleitete Kühlluft ein, ein Masseausgleich ist hier jedoch nicht vorgesehen.

Die DE 20 10 443 A1 versucht einen Masseausgleich durch ein rein mechanische Vorrichtung in Gestalt eines federdruckbeaufschlagten Vorformbodens auf der dem dortigen Preßstempel gegenüberliegenden Seite herzustellen. Der Preßstempel selbst arbeitet hier jedoch in einem fest vorgegebenen Spiel, nämlich stets bis zu einer bestimmten Höhe. Der federdruckbeaufschlagte Vorformboden ist hier zudem nur in einer, durch ein festes - vermittels eines Stiftes eingestellten - Maximums, also recht begrenzten Weise, in der Lage, einen Masseausgleich zu bewirken.

Die EP 1 129 039 B1 versucht diesem Problem dadurch zu begegnen, daß sie vermittels eines Potentiometers die letztlich erreichte tiefste Kolbenposition des Preßelements mißt, um diese dann für die Anpassung der Masse des Glaspostens über den Hub des Plungers am Speiser zu nutzen (vgl. EP 1 129 039 B1, dort Abs. [0038]).

Eine solche Vorgehensweise kann aber naturgemäß allenfalls den nächsten Glasposten von seiner Masse her ausgleichen, nicht jedoch den gerade aktuell zur Fertigung verwendeten, der den hierdurch womöglich hervorgerufenen Qualitätsmangel am Boden des Külbels bzw. späteren Glasbehälters bereits erlitten hat.

Auch ist es ein Nachteil der EP 1 129 039 B1, daß dort eine Erwärmung und Volumenausdehnung am Preßelement - etwa durch die dort bevorzugte vergleichsweise lange Berührung des Preßelements mit der warmen Glasmasse (vgl. dort insbesondere Anspruch 2) - erfolgt. Hierdurch entsteht infolge thermischer Längenausdehnung ein unkontrolliertes Spiel zwischen Preßelement und Vorform, was ebenfalls eine Gratausbildung des Vorformbodens befördert. Auch kann es infolge dessen, daß aufgrund der Wärmeausdehnung der Fürungsdurchmesser am Preßelement größer werden kann, als dessen Führungsdurchmesser in der Vorform, zu einem Verkanten oder Verklemmen von Preßelement und Vorform und damit zu erheblichen Prozeßstörungen kommen, was nicht tolerabel ist.

Vor dem Hintergrund des vorerwähnten Standes der Technik ist es daher ausgehend von der EP 1 129 039 B1 Aufgabe der vorliegenden Erfindung eine Gratbildung zwischen Pressstempel und Führungsring innerhalb des Mündungseinganges zu vermeiden, zugleich aber auch die Qualität der zu fertigenden Glasbehälter durch Vermeidung einer zu starken Gratausbildung der Vorformbodennaht sicherzustellen und bei der Fertigung ein Verkanten oder Verklemmen von Preßelement und Vorform zu vermeiden.

Diese Aufgabe wird erfindungsgemäß durch ein Vorformboden-Preß-System nach Anspruch 1 und ein Verfahren zur Herstellung eines Külbels vermittels eines solchen erfindungsgemäßen-Vorformboden-Preß-Systems nach Anspruch 11 gelöst. Zweckmäßige Ausführungsformen ergeben sich dabei aus den Ansprüchen 2 bis 9 und 11 bis 14.

Das erfindungsgemäße Vorformboden-Preß-System zur Ausbildung eines gratfreien Mündungseingangs für einen bzw. eines zu fertigenden Glasbehälters weist dabei - ähnlich wie der Stand der Technik nach EP 1 129 039 B1 - einen durch Beaufschlagung mit Gasdruck, vorzugsweise mit Druckluft, betriebenen Kolben sowie ein Preßelement mit einem Preßelementprofil auf, wobei der Kolben, wenn er auf einer Seite mit Gasdruck beaufschlagt wird, das Vorformboden-Preß-System in Preßstellung gegenüber einem in einer Vorform befindlichen zu formenden Glastropfen bringt und dabei im Kontakt des Preßelementprofils mit dem Glastropfen einen Boden für den zu fertigenden Glasbehälters vorformt. Jedoch unterscheidet sich die vorliegende Erfindung vom Stand der Technik nach EP 1 129 039 B1 dadurch, daß sie eine Steuerung oder Regelung des Kolbenhubs vorsieht, der zum Ausgleich von Masseschwankungen des Glastropfens dient, indem dieser Hub der jeweiligen Glastropfenmasse angepaßt wird.

Eine solche Anpassung des Hubs des Kolbens kann bevorzugterweise etwa vermittels eines Gasdrucksensors erfolgen, der den Gasdruck, mit dem der Kolben gerade beaufschlagt ist, mißt. Fällt nämlich ein massereicherer Tropfen in die Vorform, so ist auch das Volumen der Glasmasse dort größer und der Kolben erreicht eher den Tropfen, worauf der Gasdruck des Kolbens infolge der im wesentlichen inkompressiblem flüssigen Glasmasse alsbald nach Inkontakttreten des Preßelements mit der Glasmasse rasch ansteigt. Mißt man nun etwa diesen Druck, vorzugsweise mittels eines Gasdrucksensors, so stellt man damit letztlich auch den erforderlichen Hub bis zum Erreichen des Glastropfens fest und kann dann einen weiteren Kolbenhub rechtzeitig stoppen oder verlangsamen, bevor es zu einem zu starken Eindringen der Glasmasse in den Spalt zwischen Külbel und Vorformwandung im Bereich des Külbelbodens kommt. So kann etwa ein Ausgleich von Masseschwankungen des Glastropfens über den Kolbenhub erfolgen und zwar für das aktuell gefertigte Külbel.

Dies stellt aber beileibe nicht die einzige Möglichkeit dar, den Ausgleich von Masseschwankungen des Glastropfens über den Kolbenhub zu realisieren. So ist es etwa auch möglich, zu messen bis zu welcher Höhe der in die Vorform eingebrachte Glastropfen die Vorform füllt, was etwa mittels eines berührungsfrei arbeitenden Sensors, etwa einem optischen Sensor (z.B. einem Lasersensor) der sich etwa einer Triangulationsmessung oder einer Laufzeitmessung bedient oder auch einem 3D-Stereoaufnahme-Sensor geschehen kann. Auf diese Weise ist infolge der Messung der Füllhöhe der Vorform mit Glasmasse dann auch der Weg bestimmt, den der Kolben des Vorformboden-Preß-Systems zurücklegen muß, um das Preßelement zur Vorformung des Bodens in Kontakt mit der Glasmasse zu bringen. So kann dann am Kolben ein Wegmeßsystem vorgesehen sein, das es erlaubt das Preßelement entsprechend der tatsächlichen Füllhöhe der Vorform mit Glasmasse und damit angepaßt an die aktuelle Glasmasse über den Kolbenhub zu verfahren und so Masseschwankungen des Glastropfens über den Kolbenhub auszugleichen.

Ferner können aber auch Systeme vorgesehen sein, die die tatsächliche Masse des in die Vorform fallenden Glastropfens, etwa über eine Erfassung seiner räumlichen Ausdehnung (und des spezifischen Gewichts) etwa mittels eines Bilderfassungssystems bestimmen und hieraus den notwendigen Kolbenhubweg ermitteln. Letztlich sind somit eine Vielzahl von technischen Möglichkeiten gegeben, die es erlauben, einen Ausgleich von Masseschwankungen des Glastropfens über den Kolbenhub vorzunehmen.

Auch weist das Vorformboden-Preß-System zur Ausbildung eines gratfreien Mündungseingangs für einen bzw. eines zu fertigenden Glasbehälters nach der vorliegenden Erfindung eine Innenkühlungsvorrichtung zur Kühlung vermittels eines Kühlmediums auf, womit der nach dem Stand der Technik nach der EP 1 129 039 B1 mögliche Nachteil einer Erwärmung und Volumenausdehnung am Preßelement infolge einer langen Berührung mit der warmen Glasmasse (siehe oben) ebenfalls vermieden werden und es so nicht mehr zu einem Verkanten oder Verklemmen von Preßelement und Vorform und damit zu erheblichen Prozeßstörungen kommen kann. Entsprechend ist auch das Verfahren zur Herstellung eines Külbels hiermit so ausgestaltet, daß während der Herstellung des Külbels vermittels der Innenkühlungsvorrichtung des erfindungsgemäßen Vorformboden-Preß-Systems mit einem Kühlmedium, vorzugsweise Druckluft, gekühlt wird.

Vorzugsweise wird dabei das Kühlmedium gezielt auf die Innenflächen des Preßelements mittels geeigneter Mittel hierfür, wie etwa einer Kühlmediumszuleitung in den Kolben für Festblasluft (Druckluft) einer Glasmaschine und/oder eines im Kolben angeordneten Kühlrohrs verteilt.

Besonders bevorzugterweise ist das Kühlmedium durch ein an der Kühlmediumzuleitung eingebrachte Dichtung - etwa ein Dichtpaket - von dem Arbeitsraum des Kolbens getrennt.

Betreibt man nun ein Verfahren zur Herstellung eines Külbels vermittels dieses erfindungsgemäßen Vorformboden-Preß-Systems, wobei
a) etwa aus einem Speiser ein Glastropfen von oben in eine Vorform eingebracht, und
b) ein Stempelwerkzeug in einer Ladestellung als Fallbegrenzung zur Ladung des Glastropfens am unteren Ende der Vorform positioniert wird, und
c) das Vorformboden-Preß-System eine vertikale Schließbewegung ausführt, indem es von oben in die Vorform eingefahren wird, bis ein Anschlag an dem Vorformboden-Preß-System eine Anschlagfläche auf der Vorform erreicht, wobei der Kolben zunächst nicht mit Gasdruck beaufschlagt ist, dann aber kurz vor oder bei Erreichen der Anschlagfläche mit Gasdruck beaufschlagt wird und so nach unten bis auf die Anschlagfläche gedrückt wird, womit sich das Preßelement in Preßstellung befindet, und wobei ein Ausgleich von Masseschwankungen des Glastropfens über eine Steuerung oder Regelung Kolbenhubs erfolgt, indem dieser Hub der jeweiligen Glastropfenmasse angepaßt wird, und
d) während der vertikalen Schließbewegung des Vorformboden-Preß-Systems das Stempelwerkzeug gegen das in der Vorform entstehende Külbel nach oben weiters gegen das sich in Preßstellung befindende Preßelement gepreßt wird, bis das Stempelwerkzeug mit seiner Stempelfläche an einer Deckringfläche anliegt, wogegen es bis zur Beendigung des Preßvorganges gepreßt wird,

und wobei das Vorformboden-Preß-System während der Herstellung des Külbels vermittels einer Innenkühlungsvorrichtung des Vorformboden-Preß-Systems mit einem Kühlmedium, vorzugsweise Druckluft, gekühlt wird,
so kann nicht nur aufgrund des Masseausgleichs der eine erhebliche Reduzierung der Gratbildung am Boden der Vorform ermöglicht und so die Qualität des anschließend an die Külbelformung zu fertigenden Glasbehälters hinsichtlich der Gratausbildung der Vorformbodennaht zu gewährleisten vermag, sondern auch aufgrund der Pressung des Stempelwerkzeugs mit seiner Stempelfläche an die Deckringfläche während der vertikalen Schließbewegung des Vorformboden-Preß-Systems zugleich auch sichergestellt werden, daß eine Gratbildung zwischen Pressstempel und Führungsring innerhalb des Mündungseinganges vermieden wird. Ebenso wirkt dabei die Innenkühlung mit einem Kühlmedium einem Verkanten oder Verklemmen von Preßelement und Vorform entgegen.

Es versteht sich, daß nach dem erfindungsgemäßen Verfahren nach Beendigung des Preßvorganges eine Entformung stattfindet, wobei das Stempelwerkzeug vertikal nach unten und das Vorformboden-Preß-System vertikal nach oben ausgefahren und die Vorform geöffnet wird, worauf eine Übergabe an eine Fertigformungsstation zur Formung des Glasbehälters aus dem vorgeformten Külbel erfolgen kann.

Das Preßelementprofil des Preßelements des erfindungsgemäßen Vorformboden-Preß-Systems weist bevorzugterweise eine konvexe zum Glastropfen hin gekrümmte Geometrie auf, was den durch das Preßelement aufgebrachten Preßdruck im Külbel vorteilhafterweise reduziert.

Auch kann das Preßelement vorzugsweise vermittels einer lösbaren Verbindung am Kolben angebracht sein, was dessen leichte Auswechselbarkeit ermöglicht. Hier kann als lösbare Verbindung bevorzugterweise ein Gewinde dienen. Es sind jedoch auch andere lösbare Verbindungen, wie etwa Bajonettverschlüsse möglich.

In einer weiteren bevorzugten Ausführungsform des erfindungsgemäßen Vorformboden-Preß-Systems weist dieses - vorzugsweise in das erfindungsgemäße Vorformboden-Preß-System integrierte - Federn auf, die das Preßelement nach oben gegen eine - vorzugsweise integrierte - Anschlagfläche drücken und so in Ladestellung halten, solange der Kolben nicht mit Gasdruck beaufschlagt ist. Eine solche Ausführungsform nach der vorliegenden Erfindung ist auch deshalb vorteilhaft, weil die Federn den bereits angesprochenen Masseausgleich des Glastropfens über den Kolbenhub unterstützen, da sie den Andruck des Preßelements an der Glasmasse zu dämpfen vermögen und dafür sorgen, daß das Presselement nicht zweimal in Kontakt mit dem Glas kommt, was die Qualität der Külbelausformung negativ beeinflussen würde und so für eine zur Anpassung an die Masse des Glastropfens verwendete Steuerung oder Regelung des Kolbenhubwegs etwas mehr Reaktionszeit zur Verfügung steht, was die Steuerung und/oder Regelung des Vorganges erleichtert.

In einer weiteren besonders bevorzugten Ausführungsform des Vorformboden-Preß-Systems nach der vorliegenden Erfindung, weist dieses ein Gleitlager und/oder eine in der Vorform oben angebrachte Trichterführung auf, die den Kolben mit Presselement axial zum Vorformprofil führen, bevor das Preßelement in das Vorformprofil eintaucht, was einem Verkanten der Preßelementkante mit dem Vorformprofil wirksam entgegenzuwirken vermag.

Im folgenden werden der Stand der Technik wie auch nicht einschränkend zu verstehende Ausführungsbeispiele der vorliegenden Erfindung anhand der Zeichnung besprochen. In dieser zeigt:
- Fig. **1**: in einer schrittweise in Reihen von oben nach unten und jeweils von links nach rechts angeordneten schematischern Darstellung einzelner Fertigungsschritte einen Überblick über das erfindungsgemäße Verfahren,
- Fig. **2**: das Laden der Vorform mit einem Glastropfen als Teil des erfindungsgemäßen Verfahrens,
- Fig. **3**: wie das Stempelwerkzeug nach der vorliegenden Erfindung als Fallbegrenzung zur Ladung des Glastropfens dient,
- Fig. **4**: den Beginn einer vertikalen Schließbewegung des Vorformboden-Preß-Systems nach der vorliegenden Erfindung,
- Fig. **5**: zeigt die weitere Schließbewegung des Vorformboden-Preß-Systems und den währenddessen erfolgenden Preßvorgang des Stempelwerkzeugs gegen das in der Vorform entstehende Külbel nach oben nach der vorliegenden Erfindung,
- Fig. **6a**: zeigt eine bevorzugte Ausführungsform nach der vorliegenden Erfindung mit einer vorzugsweise vorgesehenen integrierten Innenkühlung des Preßelements des Vorformboden-Preß-Systems sowie deren Betrieb nach dem erfindungsgemäßen Verfahren,
- Fig. **6b**: zeigt das Ergebnis einer Strömungsanalyse, welche die erzwungene Konvektion am Presselement in der Ausführungsform nach der vorliegenden Erfindung mit integrierter Innenkühlung des Preßelements nach Fig. **6a** bestätigt,
- Fig. **6c**: zeigt eine Ausführungsform nach der vorliegenden Erfindung in der am Presselement des Vorformboden-Preß-Systems Entlüftungsschlitze angebracht sind,
- Fig. **7**: veranschaulicht noch einmal die Wirkungen der vorliegenden Erfindung insbesondere im Hinblick auf die Vermeidung einer Gratbildung zwischen Pressstempel und Führungsring innerhalb des Mündungseinganges, aber auch die Sicherstellung der Qualität der zu fertigenden Glasbehälter im Hinblick auf die Gratausbildung der Vorformbodennaht,
- Fig. **8**: zeigt die Entformung nach Beendigung des Preßvorgangs,
- Fig. **9**: schließlich eine Übergabe des erfindungsgemäß ausgeformten Külbels an eine Fertigformungsstation, und
- Fig. **10a,** Fig. **10b**: das Problem scharfkantiger Formnähte am Külbel, und
- Fig. **10c**: eine veränderte Lage des Grates im Bereich des Mündungseingangs.

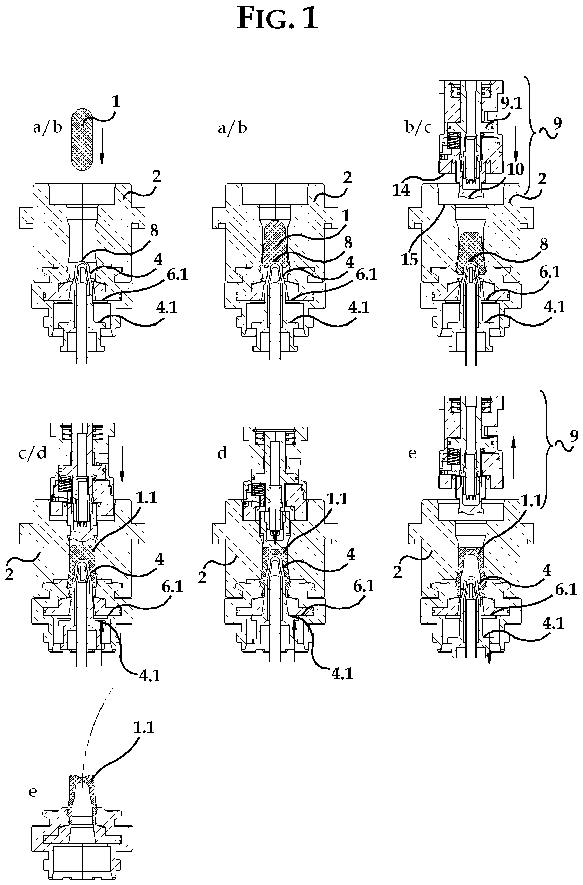

Fig. **1** gibt in einer schrittweise in Reihen von oben nach unten und jeweils von links nach rechts angeordneten schematischen Darstellung einzelner Fertigungsschritte einen Überblick über das erfindungsgemäße Verfahren zur Herstellung eines Külbels vermittels eines Vorformboden-Preß-Systems **9** nach der vorliegenden Erfindung.

Hier wird
**a** aus einem Speiser ein Glastropfen **1** von oben in eine Vorform **2** eingebracht, und
**b** ein Stempelwerkzeug **4** in einer Ladestellung **8** als Fallbegrenzung zur Ladung des Glastropfens **1** am unteren Ende der Vorform **2** positioniert.
**c** Das Vorformboden-Preß-System **9** führt eine vertikale Schließbewegung aus, indem es von oben in die Vorform **2** eingefahren wird, bis ein Anschlag **14** an dem Vorformboden-Preß-System **9** eine Anschlagfläche **15** auf der Vorform **2** erreicht ist, wobei der Kolben **9.1** zunächst nicht mit Gasdruck beaufschlagt ist, dann aber kurz vor Erreichen der Anschlagfläche **15** mit Gasdruck beaufschlagt wird und so nach unten bis auf die Anschlagfläche **15** gedrückt wird, womit sich das Preßelement **10** in Preßstellung befindet, wobei ein Ausgleich von Masseschwankungen des Glastropfens **1** über eine Steuerung oder Regelung des Kolbenhubs des Kolbens **9.1** erfolgt, indem dieser Hub der jeweiligen Glastropfenmasse angepaßt wird.
**d** Während der vertikalen Schließbewegung des Vorformboden-Preß-Systems **9** wird das Stempelwerkzeug **4** gegen das in der Vorform **2** entstehende Külbel **1.1** nach oben und weiters gegen das sich in Preßstellung befindende Preßelement **10** gepreßt, bis das Stempelwerkzeug **4** mit seiner Stempelfläche **4.1** an einer Deckringfläche **6.1** anliegt, wogegen es bis zur Beendigung des Preßvorganges gepreßt bleibt.
**e** Nach Beendigung des Preßvorganges findet eine Entformung statt, wobei das Stempelwerkzeug **4** vertikal nach unten und das Vorformboden-Preß-System **9** vertikal nach oben ausgefahren und die Vorform **2** geöffnet wird, worauf eine Übergabe an eine Fertigformungsstation zur Formung eines Glasbehälters aus dem Külbel erfolgen kann, wobei in der hier zu sehenden Darstellung in letzten Reihe ganz links die Übergabe an die Fertigformstation vermittels des dort zu sehenden Bogens, der das Schwenken des Külbels andeutet, zu sehen ist.

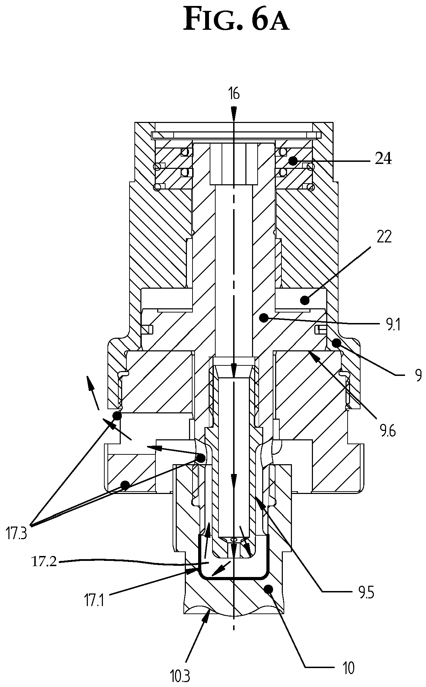

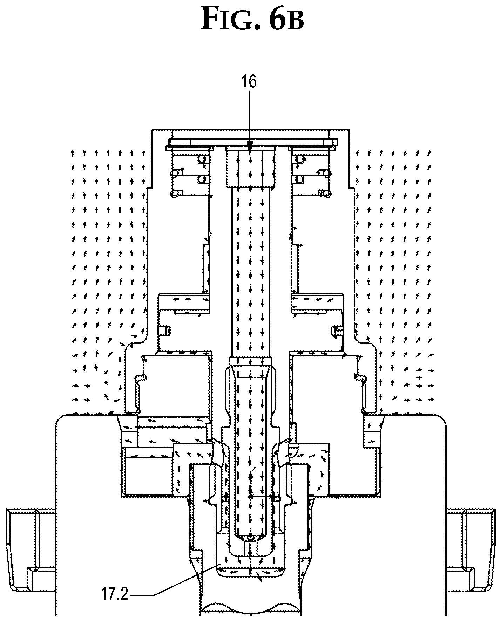

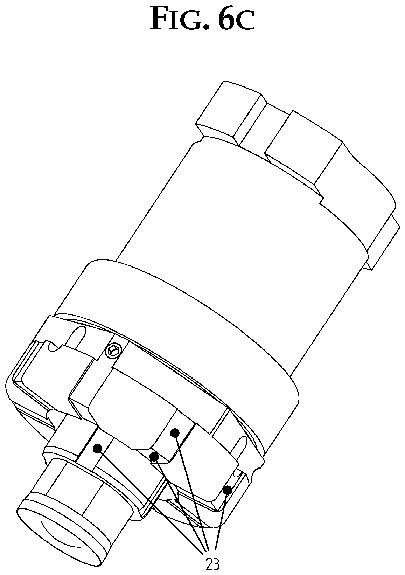

Während der Herstellung des Külbels **1.1** wird dabei vermittels einer Innenkühlungsvorrichtung (siehe insbesondere auch Fig. **6a****,** **6b****,** **6c****)** des Vorformboden-Preß-Systems **9** mit einem Kühlmedium, vorzugsweise Druckluft, gekühlt, Auf diese Weise wird einem Verklemmen oder Verkanten zwischen Preßelement **10** und Vorformprofil **11** entgegengewirkt (vgl. hierzu auch die Ausführungen zu Fig. **6a****,** **6b****,** **6c** sowie die Figuren selbst), was sich sehr positiv auf die Prozesßtabilität auswirkt.

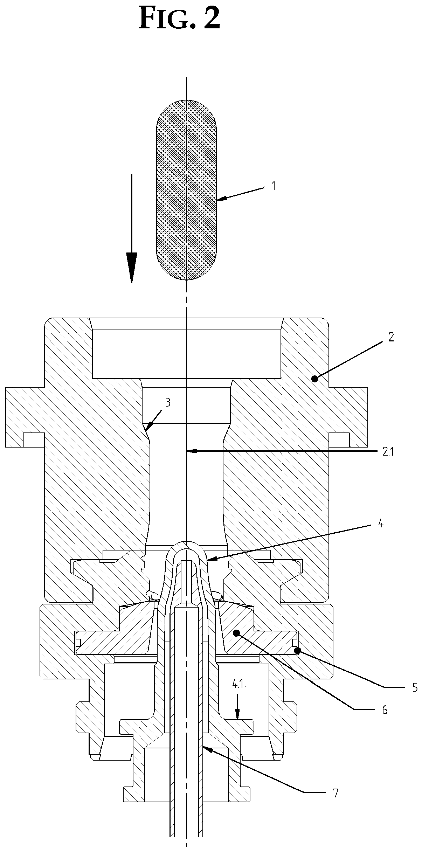

Fig. **2** zeigt das Laden der Vorform **2** mit einem Glastropfen **1** als Teil des erfindungsgemäßen Verfahrens. Hier wird gezeigt, wie aus einem Verteiler (Speiser) ein Glastropfen **1** von oben in eine Vorform **2,** welche eine längsgeteilte Formteilung aufweist, eingebracht wird. Der Glastropfen **1** wird dabei während des vertikalen freien Falls an einer in dem oberen Teil der Vorform **2** angebrachten Trichteröffnung **3** axial **2.1** geführt. Im unteren Teil der Darstellung befindet sich ein Stempelwerkzeug **4** mit integriertem Kühlrohr **7,** eine Mündungsform **5** und ein Deckring **6** welcher radial und axial **2.1** in der Mündungsform **5** geführt wird.

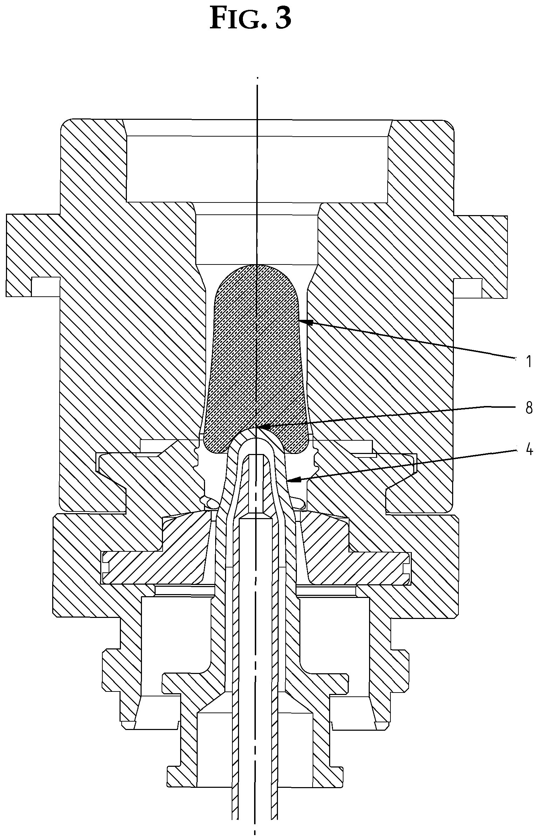

Fig. **3** zeigt wie das Stempelwerkzeug **4** nach der vorliegenden Erfindung als Fallbegrenzung zur Ladung des Glastropfens **1** dient. Das Stempelwerkzeug **4** ist hier nämlich in sogenannter Ladestellung **8** positioniert und dient dort als Fallbegrenzung zur Ladung des Glastropfens **1.**

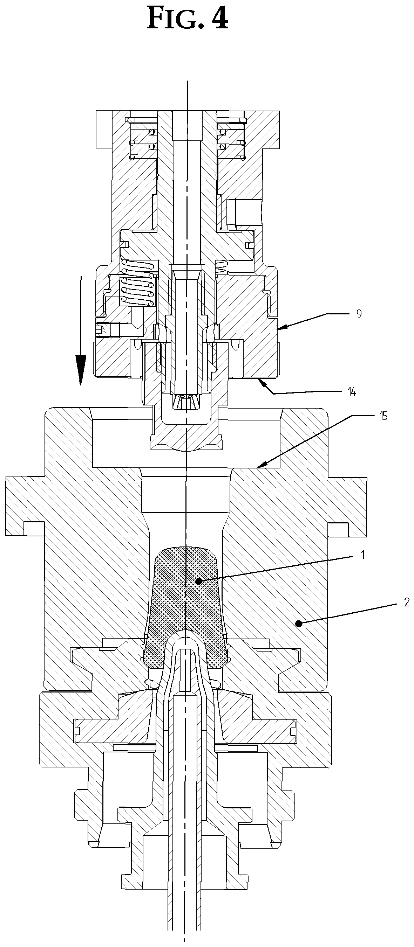

Fig. **4** zeigt den Beginn einer vertikalen Schließbewegung des Vorformboden-Preß-Systems **9** nach der vorliegenden Erfindung. Sobald nämlich der Glastropfen **1** in die Vorform **2** eingebracht ist, schließt das Vorformboden-Preß-System **9** mittels vertikaler Bewegung von oben nach unten die Vorform **2** an deren oberen Ende.

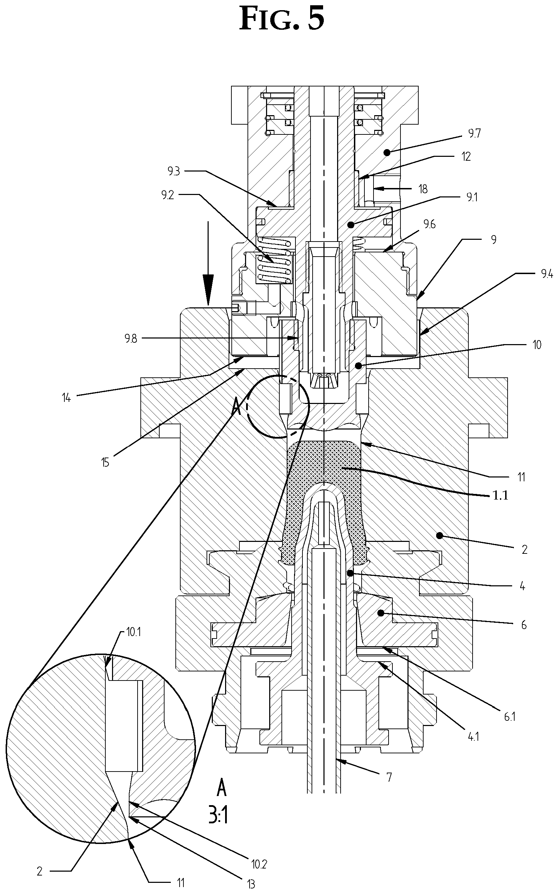

Fig. **5** zeigt die weitere Schließbewegung des Vorformboden-Preß-Systems **9** und den währenddessen erfolgenden Preßvorgang des Stempelwerkzeugs **4** gegen das in der Vorform entstehende Külbel **1.1** nach oben nach der vorliegenden Erfindung.

Während der vertikalen Schließbewegung wird das Vorformboden-Preß-System **9** von der Vorform **2** axial, mittels einer Durchmesserführung **9.4** ausgerichtet und geführt. Dabei ist der Kolben **9.1** nicht mit Druckluft **18** beaufschlagt und wird mittels Federn **9.2** vertikal nach oben gegen eine integrierte Anschlagfläche **9.3** gedrückt. Ein Presselement **10,** welches der Vorformung des Bodens dient, befindet sich somit in Ladestellung. Bei weiterer vertikalen Schließbewegung des Vorformboden-Press-Systems **9** wird das Presselement **10** zuerst an einer oberen Trichterführung **10.1** axial ausgerichtet. Dies geschieht vor Eindringen des unteren Führungsdurchmessers **10.2** am Presselement **10** in das Vorformprofil **11.** Dadurch und durch ein Gleitlager **12,** welches im Vorformboden-Press-System **9** angeordnet ist, wird sichergestellt, daß das Presselement **10** vor Eindringen in das Vorformprofil **11** zur Vorform **2** axial ausgerichtet ist, was sich sehr vorteilhaft auf die Prozeßstabilität auswirkt, da so einem Verkanten der Presselementkante **13** mit dem Vorformprofil **11** entgegengewirkt wird. Die vertikale Schließbewegung des Vorformboden-Press-Systems **9** ist beendet, sobald der Anschlag **14** am Vorformboden-Press-System **9** die Anschlagfläche **15** auf der Vorform **2** erreicht. Vorzugsweise kurz vor Erreichen der Anschlagfläche **15** wird der Kolben **9.1** mittels Druckluft **18** entgegen der Federn **9.2** nach unten bis auf die Anschlagfläche **9.6** gedrückt. Das Presselement **10** befindet sich nun in Preßstellung.

Während der vertikalen Schließbewegung des Vorformboden-Press-Systems **9** wird das Stempelwerkzeug **4** entgegen das in der Vorform **2** entstehende Külbel **1.1** nach oben gegen das Presselement **10,** das sich in Preßstellung (s.o.) befindet, gepreßt. Die Bewegungen und Kühlungsmöglichkeiten des Stempelwerkzeuges **4** und dessen integriertes Kühlrohr **7** werden vorzugsweise in bekannter Weise durch die entsprechenden IS Maschinenelemente und -mechanismen ausgeführt.

Die Bewegung des Stempelwerkzeugs **4** endet sobald dessen Stempelfläche **4.1** an der Deckringfläche **6.1** anliegt. Das Stempelwerkzeug **4** wird bis zur Fertigstellung des Preßvorganges an den Deckring **6** gepresst.

Fig. **6a** zeigt die nach der vorliegenden Erfindung vorgesehene integrierte Innenkühlung des Preßelements **10** des erfindungsgemäßen Vorformboden-Preß-Systems **9** sowie deren Betrieb nach dem erfindungsgemäßen Verfahren.

In der hier dargestellten Ausführungsform verfügt das erfindungsgemäße Vorformboden-Press-System **9** über eine integrierte Innenkühlung des Presselements **10.** Dabei wird auf eine bei IS-Glasmaschinen übliche Druckluftquelle für das sogenannte Festblasen zurückgegriffen. Diese Druckluft wird über eine für ihren Einlaß dienende Kühlmediumzuleitung **16** zugeführt und zur Kühlung des Presselements **10** verwendet. Über den Kolben **9.1** wird diese hier als Kühlmedium dienende Druckluft durch ein im Kolben **9.1** integriertes Kühlrohr **9.5** auf die Innenflächen **17.1** des Presselements **10** geleitet. Durch die erzwungene Konvektion im Bereich **17.2** zwischen Kühlmedium (etwa Druckluft - s.o. - als Kühlluft bzw. Fluid) und Innenflächen **17.1** des Presselements **10** wird dieses gekühlt und somit dessen Festkörpertemperatur stabilisiert. Vorzugsweise wird das Kühlmedium durch ein an der Kühlmediumzuleitung **16** eingebrachtes Dichtpaket **24** von dem Arbeitsraum **22** des Kolbens **9.1** getrennt.

Fig. **6b** zeigt das Ergebnis einer Strömungsanalyse, welche die erzwungene Konvektion am Presselement in der Ausführungsform nach der vorliegenden Erfindung mit integrierter Innenkühlung des Preßelements nach Fig. **6a** darstellt. Dargestellt ist der Strömungsverlauf. Über ein im Vorformboden-Press-System **9** integriertes Entlüfungssystem (vgl. auch Fig. **6a**) **17.3** entweicht das über die Kühlmediumzuleitung **16** zugeführte erwärmte Kühlmedium, vorzugsweise die Kühlluft. Dadurch läßt sich die Wärmeausdehung der Preßelementführungen (vgl. Fig.**5**) **10.1, 10.2** steuern, was dem Nachteil der Erwärmung und Volumenausdehnung am Preßelement infolge einer etwaig wünschenswerten vergleichsweise langen Berührung mit der warmen Glasmasse in bestimmten Ausführungsformen (vgl. den Stand der Technik nach der EP 1 129 039 B1, dort Anspruch 2) entgegen wirkt.

Hierdurch kann ein Verklemmen zwischen Preßelement **10** und Vorformprofil **11** vermieden werden, was sich sehr positiv auf die Prozesßtabilität auswirkt.

Auch führt die Kühlung zu einer Reduzierung des Spiels (vgl. auch Fig. **7**) **11.1** zwischen Presselement **10** und Vorformprofil **11.** was der Entstehung einer unerwünscht stark ausgebildeten Vorformbodennaht **19** ebenfalls entgegenwirkt.

Fig. **6c** zeigt eine Ausführungsform nach der vorliegenden Erfindung in der am Presselement des Vorformboden-Preß-Systems Entlüftungsschlitze **23** angebracht sind, die eine Entlüftung des Mediums, vorzugsweise Luft, das durch die Verdrängung im Preßvorgang entweichen muß, sicherstellt. Bevorzugterweise sind auch am Führungsteil Entlüftungsschlitze angebracht.

Fig. **7** veranschaulicht noch einmal die Wirkungen der vorliegenden Erfindung insbesondere im Hinblick auf die Vermeidung einer Gratbildung zwischen Pressstempel **4** und Führungsring innerhalb des Mündungseinganges, aber auch die Sicherstellung der Qualität der zu fertigenden Glasbehälter im Hinblick auf eine unerwünschte Gratausbildung der Vorformbodennaht.

Der Ausgleich möglicher Masse- bzw. Gewichtsschwankungen des Glastropfens **1** wird über den Hub des Kolbens **9.1** realisiert, was - wie bereits erwähnt - auf verschiedene Weise - vorzugsweise etwa über eine Messung und Auswertung des am Kolben anliegenden Drucks - technisch realisiert werden kann. Dabei wird der Kolben **9.1** durch den Druck im Külbel **1.1** entgegen der Druckkraft des am Kolben **9.1** wirkenden Gasdrucks verschoben. Durch diese Krafteinwirkung wird das Külbel **1.1** fertiggepreßt.

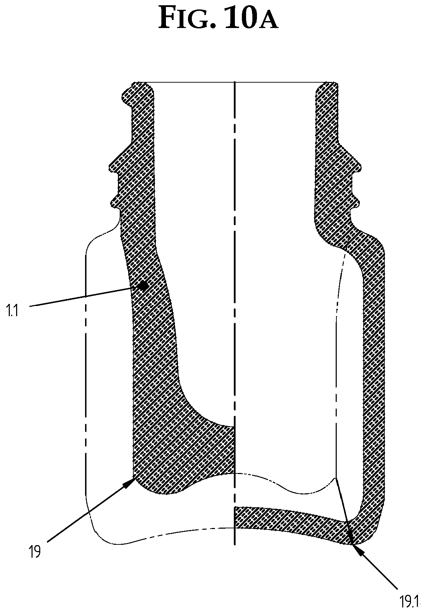

Der Masse- bzw. Gewichtsausgleich wirkt einem Eindringen von Glasmasse in den Spalt **11.1** zwischen Presselement **10** und Vorformprofil **11** entgegen, was eine unerwünschte Ausbildung eines Grats **19** am Vorformboden zu vermeiden hilft (vgl. auch Fig. **10a**) und so der Sicherstellung der Qualität des zu fertigenden Glasbehälters in diesem Bereich dient.

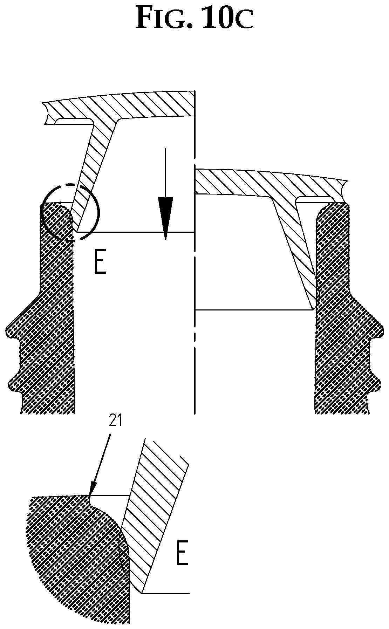

Durch den Masse- bzw. Gewichtsausgleich im Vorformboden-Press-System **9** hat das Stempelwerkzeug **4** aber durch die Begrenzung am Deckring **6** immer auch die gleiche Arbeitsendstellung unabhängig von der Masse bzw. dem Gewicht des Glastropfens **1** bzw. Külbels **1.1** und dem Volumen des Vorformprofils **11.** Hierdurch wird so zugleich auch eine Veränderung der Position des Grates zwischen Stempelwerkzeug **4** und Deckring **6** in den Bereich ausßerhalb des Mündungseinganges möglich. Die hieraus resultierende neue Lage des - dann so nicht mehr störenden - Grates **21** außerhalb des Mündungseinganges im Bereich der Mündung ist nicht nur hier, sondern auch in Fig. **10c** zu sehen. Aufgrund dieser Wirkung der vorliegenden Erfindung verbessert sich die Montagefreundlicheit sowie die Dichtwirkung innendichtender Verschlüsse erheblich, da mit dieser Änderung das Risiko von Verschlußabrieb durch einen sich im Bereich der Mündung bildenden Grat nicht mehr besteht. Die Eindrückkraft bzw. die Reibung des Verschlusses bei Einbringen der Verschlüsse in die Glasbehälter wird infolge somit erheblich geringer.

Fig. **8** zeigt die Entformung nach Beendigung des Preßvorgangs, wo das Stempelwerkzeug **4** vertikal nach unten aus dem Külbel **1.1** und der Vorform **2** sowie das Vorformboden-Preß-System **9** vertikal nach oben ausgefahren und die Vorform **2** geöffnet wird.

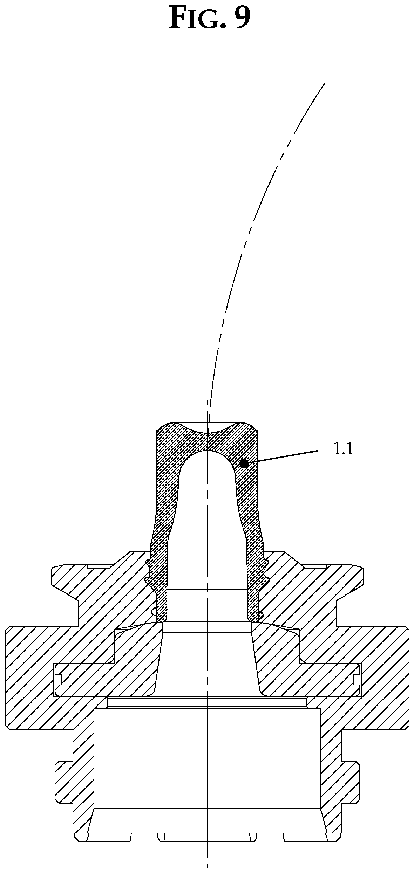

Fig. **9** zeigt schließlich eine Übergabe des erfindungsgemäß ausgeformten Külbels **1.1** an eine Fertigformungsstation, wobei in der hier zu sehenden Darstellung durch den nach oben rechts weisenden Bogen eine entsprechende Schwenkbewegung des Külbels **1.1** angedeutet ist.

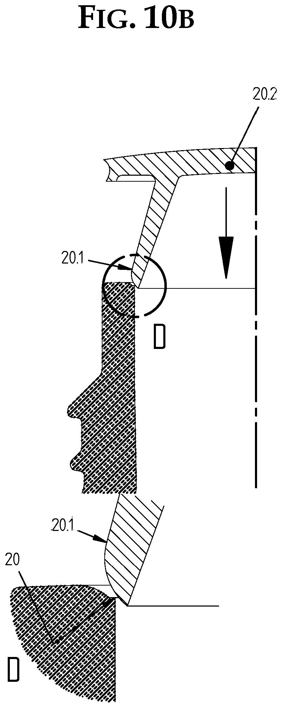

Fig. **10a** und Fig. **10b** zeigen das Problem scharfkantiger Formnähte am Külbel.

Wie bereits einleitend angesprochen, ist es nach dem Stand der Technik entsprechend der EP 0 327 240 A1, die eine Vorrichtung (vgl. dort etwa Fig. 1) für ein Preßblasverfahren bei sogenannten IS (*Individual Section*) Glasformmaschinen zeigt, so, daß dort scharfkantige Formnähte am Külbel entstehen können. Nach der der EP 0 327 240 A1 wird die Arbeitsendstellung des Preßstempels durch den entstehenden Widerstand zwischen Preßstempel und dem in der Vorform entstehenden Külbel (also das an die Vorform und Mündungsform gepresste Glas) bestimmt und ist somit abhängig vom Volumen der Vorformausnehmung und/oder der Masse bzw. dem Gewicht des Glastropfens. Aufgrund der Masseschwankungen des Glastropfens erreicht hier die Arbeitsendstellung des an seiner Führung zur der Mündungsform hin leicht konisch bis fast zylindrisch gestalteten Preßstempels somit jeweils unterschiedliche Endpositionen.

Gegen Ende des Preßvorganges, dann wenn der Preßstempel seine - (bei fixem Volumen der Vorformausnehmung) von der Masse des Glastropfens abhängige - Arbeitsendstellung nahezu erreicht hat, wird dieser durch einen nicht längsgeteilten Führungsring radial geführt und zentriert.

Wegen des Führungsspiels bzw. Spalts zwischen Führungsring und Preßstempel und der leichten Konizität des Pressstempels in diesem Bereich kann in bestimmten Betriebssituationen Glasmasse in den Spalt gelangen, wobei die Spaltgröße abhängig von der jeweiligen Arbeitsendstellung des Preßstempels ist, die wiederum von der Masse des Glastropfens abhängt (s.o.).

Wie bereits erwähnt, wird das an die Vorform und Mündungsform gepreßte Glas als Külbel **1.1** bezeichnet. Die Position des Spalts und damit der Glasnaht **20** ist direkt am Külbeleingang positioniert und bei dem Verfahren nach der EP 0 327 240 A1 am konischen fast zylindrischen Führungsteil des Pressstempels wegen des über den Preßstempelwiderstand realisierten Gewichtsausgleichs, welcher benötigt wird, um die Masseschwankungen des Glastropfens zu kompensieren, auch nicht vermeidbar.

Die sich hierdurch im ungünstigen Fall bildenden scharfkantigen Glasnähte bzw. Gratbildungen können aber die Dichtwirkung bzw. Montagebedingungen zwischen einem Glasbehälterverschluss **20.2** und dem Glasbehälter verschlechtern sowie innerhalb des Mündungseinganges dichtende und somit vorgespannte Verschlüsse oder Einsätze **20.1** beschädigen und große vertikale Eindrückkräfte bewirken, was somit ein Nachteil dieses Verfahrens nach der EP 0 327 240 A1 darstellt.

Fig. **10c** zeigt eine veränderte Lage des Grates im Bereich des Mündungseingangs, der durch die vorliegende Erfindung erreicht wird, die die anhand von Fig. **10a** und **10b** vorstehend angeführten Nachteile meidet, indem sie sicherstellt, daß das Stempelwerkzeug während des Preßvorganges bis zu dessen Ende an den Deckring **6** gepreßt bleibt und so den sich nach dem Stand der Technik zwischen Preßstempel und Führungsring bildenden störenden Grat **20** (s.o.) vermeidet, da sich nun allenfalls ein nicht störendender - wenn denn überhaupt - sich außerhalb des Mündungseinganges bildendender Grat **21** ergibt.

Zugleich gewährleistet die vorliegende Erfindung die Ausbildung eines Vorformbodens mit einem Grat **19** (vgl. die linke Hälfte der Darstellung in Fig. **10a****)** der gegenüber dem Stand der Technik - wenn denn überhaupt noch vorhanden - erheblich verkleinert ist und so in der anschließenden Fertigformung nach unten hin auf den Boden des Behälters in einer Rundung zur Position **19.1** geblasen werden kann (vgl. die rechte Hälfte der Darstellung in Fig. **10a****)** und so auch eine hohe Qualität des Bodens des zu fertigenden Glasbehälters gewährleistet.

## Patentansprüche

1. Vorformboden-Preß-System **(9)** zur Ausbildung eines gratfreien Mündungseingangs für einen zu fertigenden Glasbehälter, welches einen durch Beaufschlagung mit Gasdruck, vorzugsweise mit Druckluft **(18),** betriebenen Kolben **(9.1)** sowie ein Preßelement **(10)** mit einem Preßelementprofil **(10.3)** aufweist, wobei der Kolben **(9.1),** wenn er auf einer Seite mit Gasdruck beaufschlagt wird, das Vorformboden-Preß-System **(9)** in Preßstellung gegenüber einem in einer Vorform **(2)** befindlichen zu formenden Glastropfen **(1)** bringt und dabei im Kontakt des Preßelementprofils **(10.3)** mit dem Glastropfen **(1)** einen Boden für den zu fertigenden Glasbehälters vorformt, **dadurch gekennzeichnet, daß** das Vorformboden-Preß-System **(9)** eine Steuerung oder Regelung des Hubs des Kolbens **(9.1)** aufweist, wobei dieser Hub des Kolbens **(9.1)** zum Ausgleich von Masseschwankungen des Glastropfens **(1)** dient, indem dieser Hub der jeweiligen Glastropfenmasse angepaßt wird, wobei das Vorformboden-Preß-System **(9)** eine Innenkühlungsvorrichtung zur Kühlung vermittels eines Kühlmediums aufweist.

2. Vorformboden-Preß-System **(9)** zur Ausbildung eines gratfreien Mündungseingangs für einen zu fertigenden Glasbehälter nach Anspruch 1, **dadurch gekennzeichnet, daß** die Innenkühlungsvorrichtung zur Kühlung ein Mittel aufweist, das das Kühlmedium gezielt auf die Innenflächen **(17.1)** des Presselements **(10)** verteilt.

3. Vorformboden-Preß-System **(9)** zur Ausbildung eines gratfreien Mündungseingangs für einen zu fertigenden Glasbehälter nach Anspruch 1 oder 2, **dadurch gekennzeichnet, daß** das Mittel zur gezielten Verteilung des Kühlmediums auf die Innenflächen **(17.1)** des Presselements **(10)** eine Kühlmediumszuleitung **(16)** für Festblasluft einer Glasmaschine als Druckluft zur Kühlung in den Kolben **(9.1)** aufweist.

4. Vorformboden-Preß-System **(9)** zur Ausbildung eines gratfreien Mündungseingangs für einen zu fertigenden Glasbehälter nach einem der Ansprüche 1, 2 oder 3, **dadurch gekennzeichnet, daß** das Mittel zur gezielten Verteilung des Kühlmediums auf die Innenflächen **(17.1)** des Presselements **(10)** ein im Kolben **(9.1)** angeordnetes Kühlrohr **(9.5)** aufweist.

5. Vorformboden-Preß-System **(9)** zur Ausbildung eines gratfreien Mündungseingangs für einen zu fertigenden Glasbehälter nach Anspruch 3 oder 4, **dadurch gekennzeichnet, daß** das Kühlmedium durch ein an der Kühlmediumzuleitung **(16)** eingebrachtes Dichtpaket **(24)** von dem Arbeitsraum **(22)** des Kolbens **(9.1)** getrennt ist.

6. Vorformboden-Preß-System **(9)** zur Ausbildung eines gratfreien Mündungseingangs für einen zu fertigenden Glasbehälter nach einem der Ansprüche 1 bis 5, **dadurch gekennzeichnet, daß** das Preßelementprofil **(10.3)** eine konvexe oder konkave zum Glastropfen **(1)** hin gekrümmte Geometrie aufweist.

7. Vorformboden-Preß-System **(9)** zur Ausbildung eines gratfreien Mündungseingangs für einen zu fertigenden Glasbehälter nach einem der Ansprüche 1 bis 6, **dadurch gekennzeichnet, daß** das Preßelement **(10)** vermittels einer lösbaren Verbindung am Kolben **(9.1)** angebracht ist.

8. Vorformboden-Preß-System **(9)** zur Ausbildung eines gratfreien Mündungseingangs für einen zu fertigenden Glasbehälter nach Anspruch 7, **dadurch gekennzeichnet, daß** als lösbare Verbindung ein Gewinde **(9.8)** dient.

9. Vorformboden-Preß-System **(9)** zur Ausbildung eines gratfreien Mündungseingangs für einen zu fertigenden Glasbehälter nach einem der Ansprüche 1 bis 8, **dadurch gekennzeichnet, daß** das Vorformboden-Preß-System **(9)** Federn **(9.2)** aufweist, die das Preßelement **(10)** nach oben gegen eine, vorzugsweise integrierte, Anschlagfläche **(9.3)** drücken und so in Ladestellung halten, solange der Kolben **(9.1)** nicht mit Gasdruck beaufschlagt ist.

10. Vorformboden-Preß-System **(9)** zur Ausbildung eines gratfreien Mündungseingangs für einen zu fertigenden Glasbehälter nach einem der Ansprüche 1 bis 9, **dadurch gekennzeichnet, daß** das Vorformboden-Preß-System **(9)** ein Gleitlager **(12)** und eine in der Vorform **(2)** oben angebrachte Trichterführung **(10.1)** aufweist, die den Kolben **(9.1)** mit Preßelement **(10)** axial zum Vorformprofil **(11)** führen, bevor das Preßelement **(10)** in das Vorformprofil **(11)** eintaucht.

11. Verfahren zur Herstellung eines Külbels **(1.1)** vermittels eines Vorformboden-Preß-Systems **(9)** nach einem der Ansprüche 1 bis 10, wobei
a) - vorzugsweise aus einem Speiser - ein Glastropfen **(1)** von oben in eine Vorform **(2)** eingebracht, und
b) ein Stempelwerkzeug **(4)** in einer Ladestellung **(8)** als Fallbegrenzung zur Ladung des Glastropfens **(1)** am unteren Ende der Vorform **(2)** positioniert wird,
c) das Vorformboden-Preß-System **(9)** eine vertikale Schließbewegung ausführt, indem es von oben in die Vorform **(2)** eingefahren wird, bis ein Anschlag **(14)** an dem Vorformboden-Preß-System **(9)** eine Anschlagfläche **(15)** auf der Vorform **(2)** erreicht, wobei der Kolben **(9.1)** zunächst nicht mit Gasdruck beaufschlagt ist, dann aber kurz vor oder bei Erreichen der Anschlagfläche **(15)** mit Gasdruck beaufschlagt wird und so nach unten bis auf die Anschlagfläche **(15)** gedrückt wird, womit sich das Preßelement **(10)** in Preßstellung befindet, und wobei
ein Ausgleich von Masseschwankungen des Glastropfens **(1)** über eine Steuerung oder Regelung des Kolbenhubs erfolgt, indem dieser Hub der jeweiligen Glastropfenmasse angepaßt wird,
d) während der vertikalen Schließbewegung des Vorformboden-Preß-Systems **(9)** das Stempelwerkzeug **(4)** gegen das in der Vorform **(2)** entstehende Külbel **(1.1)** nach oben weiters gegen das sich in Preßstellung befindende Preßelement **(10)** gepreßt wird, bis das Stempelwerkzeug **(4)** mit seiner Stempelfläche **(4.1)** an einer Deckringfläche **(6.1)** anliegt, wogegen es bis zur Beendigung des Preßvorganges gepreßt wird, und
e) nach Beendigung des Preßvorganges eine Entformung stattfindet, wobei das Stempelwerkzeug **(4)** vertikal nach unten und das Vorformboden-Preß-System **(9)** vertikal nach oben ausgefahren und die Vorform **(2)** geöffnet wird, worauf eine Übergabe an eine Fertigformungsstation erfolgen kann. wobei
das Vorformboden-Preß-System **(9)** während der Herstellung des Külbels **(1.1)** vermittels einer Innenkühlungsvorrichtung des Vorformboden-Preß-Systems **(9)** mit einem Kühlmedium, vorzugsweise Druckluft, gekühlt wird.

12. Verfahren nach Anspruch 11 zur Herstellung eines Külbels **(1.1)** vermittels eines Vorformboden-Preß-Systems **(9)** nach einem der Ansprüche 2 bis 10, **dadurch gekennzeichnet, daß** das Kühlmedium, vorzugsweise Festblasluft einer Glasmaschine als Druckluft, zur Kühlung gezielt auf die Innenflächen **(17.1)** des Presselements **(10)** verteilt wird.

13. Verfahren nach Anspruch 12 zur Herstellung eines Külbels **(1.1)** vermittels eines Vorformboden-Preß-Systems **(9)** nach Anspruch 9 oder 10, **dadurch gekennzeichnet, daß** während das Vorformboden-Preß-System **(9)** eine vertikale Schließbewegung ausführt, indem es von oben in die Vorform **(2)** eingefahren wird und solange der Kolben **(9.1)** dabei noch nicht mit Gasdruck beaufschlagt ist, der Kolben **(9.1)** vermittels der Federn **(9.2)** des Vorformboden-Preß-Systems **(9)** vertikal nach oben gegen eine, vorzugsweise integrierte, Anschlagfläche **(9.3)** gedrückt und so in Ladestellung gehalten wird.

14. Verfahren nach Anspruch 13 zur Herstellung eines Külbels **(1.1)** vermittels eines Vorformboden-Preß-Systems **(9)** nach Anspruch 10, **dadurch gekennzeichnet, daß** während das Vorformboden-Preß-System **(9)** eine vertikale Schließbewegung ausführt, indem es von oben in die Vorform **(2)** eingefahren wird, das Preßelement **(10)** vor dem Eintauchen des unteren Führungsdurchmessers **(10.2)** am Preßelement **(10)** in das Vorformprofil **(11)** an der oberen Trichterführung **(10.1)** und durch das Gleitlager **(12)** axial ausgerichtet wird, um ein Verkanten einer Preßelementkante **(13)** mit dem Vorformprofil **(11)** zu verhindern.

## Claims

1. Blank mould baffle pressing system **(9)** for forming a burr-free mouth entry of a glass container to be produced, which comprises a piston **(9.1)** operated by the supply of gas pressure, preferably compressed air **(18),** and a pressing element **(10)** with a pressing element profile **(10.3),** whereby the piston **(9.1),** when subjected with gas pressure on one side, brings the blank mould baffle pressing system **(9)** into a pressing position against a glass gob **(1)** to be formed in a blank mould **(2),** and preforms a baffle for the glass container to be produced in the process of contact of the pressing element profile **(10.3)** with the glass gob **(1), characterized in that** the blank mould baffle pressing system **(9)** comprises a control or closed-loop-control of the stroke of the piston **(9.1),** which serves to compensate for mass fluctuations of the glass gob **(1)** by adapting this stroke to the respective glass gob mass, the blank mould baffle pressing system **(9)** having an internal cooling device for cooling by means of a cooling medium.

2. Blank mould baffle pressing system (9) for forming a burr-free mouth entry of a glass container to be produced according to claim 1, **characterized in that** the internal cooling device for cooling has a means that specifically distributes the cooling medium on the inner surfaces **(17.1)** of the pressing element **(10).**

3. Blank mould baffle pressing system **(9)** for forming a burr-free mouth entry of a glass container to be produced according to claim 1 or 2, **characterized in that** the means for targeted distribution of the cooling medium on the inner surfaces **(17.1)** of the pressing element **(10)** has a cooling medium supply line **(16)** for air for settle blowing of a glass machine as compressed air for cooling in the piston **(9.1).**

4. Blank mould baffle pressing system **(9)** for forming a burr-free mouth entry of a glass container to be produced according to any one of claims 1, 2 or 3, **characterized in that** the means for targeted distribution of the cooling medium on the inner surfaces **(17.1)** of the pressing element **(10)** has a cooling tube **(9.5)** arranged in the piston **(9.1).**

5. Blank mould baffle pressing system **(9)** for forming a burr-free mouth entry of a glass container to be produced according to claim 3 or 4, **characterized in that** the cooling medium is separated from the working area **(22)** of the piston **(9.1)** by a seal package **(24)** inserted at the cooling medium supply line **(16).**

6. Blank mould baffle pressing system **(9)** for forming a burr-free mouth entry of a glass container to be produced according to any one of claims 1 to 5, **characterized in that** the pressing element profile **(10.3)** has a convex or concave geometry curved towards the glass gob **(1).**

7. Blank mould baffle pressing system **(9)** for forming a burr-free mouth entry of a glass container to be produced according to any one of claims 1 to 6, **characterized in that** the pressing element **(10)** is attached to the piston **(9.1)** by means of a detachable connection.

8. Blank mould baffle pressing system **(9)** for forming a burr-free mouth entry of a glass container to be produced according to claim 7, **characterized in that** a thread **(9.8)** serves as the detachable connection.

9. Blank mould baffle pressing system **(9)** for forming a burr-free mouth entry of a glass container to be produced according to any one of claims 1 to 8, **characterized in that** the blank mould baffle pressing system **(9)** comprises springs **(9.2)** which press the pressing element **(10)** upwards against a preferably integrated stop surface **(9.3)** and thus keep it in the loading position as long as the piston **(9.1)** is not subjected with gas pressure.

10. Blank mould baffle pressing system **(9)** for forming a burr-free mouth entry of a glass container to be produced according to any one of claims 1 to 9, **characterized in that** the blank mould baffle pressing system **(9)** comprises a slide bearing **(12)** and a funnel guide **(10.1)** attached at the top in the blank mould **(2),** which guide the piston **(9.1)** with pressing element **(10)** axially to the blank mould profile **(11)** before the pressing element **(10)** immerses into the blank mould profile **(11).**

11. Method for producing a parison **(1.1)** using a blank mould baffle pressing system **(9)** according to any one of claims 1 to 10, wherein
a) - preferably from a feeder - a glass gob **(1)** is loaded from above into a blank mould **(2),** and
b) a plunger tool **(4)** is positioned in a loading position **(8)** as a falling limit for loading the glass gob **(1)** at the lower end of the blank mould **(2),**
c) the blank mould baffle pressing system performs a vertical closing movement by being moved from above into the blank mould **(2)** until a stop **(14)** on the blank mould baffle pressing system **(9)** reaches a stop surface **(15)** on the blank mould **(2),** whereby the piston **(9.1)** is initially not subjected to gas pressure, but then shortly before or when reaching the stop surface **(15)** is subjected to gas pressure and is thus pressed down to the stop surface **(15),** whereby the pressing element **(10)** is in pressing position, and whereby a compensation for mass fluctuations of the glass gob **(1)** is achieved via a control or closed-loop-control of the piston stroke, by adapting this stroke to the respective glass gob mass,
d) during the vertical closing movement of the blank mould baffle pressing system **(9),** the plunger tool **(4)** is furthermore pressed against the parison **(1.1)** forming in the blank mould **(2)** upwards against the pressing element **(10)** in pressing position, until the plunger tool **(4)** with its plunger surface **(4.1)** stops against a guidering surface **(6.1),** against which it is pressed until the pressing process is completed, and
e) after completion of the pressing process, a demoulding takes place, whereby the plunger tool **(4)** is moved vertically downwards and the blank mould baffle pressing system **(9)** is driven out vertically upwards and the blank mould **(2)** is opened, whereupon a handover to a final shaping station can take place, whereby
the blank mould baffle pressing system **(9)** is cooled during the production of the parison **(1.1)** by means of an internal cooling device of the blank mould baffle pressing system **(9)** with a cooling medium, preferably compressed air.

12. Method according to claim 11 for producing a parison **(1.1)** using a blank mould baffle pressing system **(9)** according to any one of claims 2 to 10, **characterized in that** the cooling medium, preferably pressurized settle blow air from a glass machine, is specifically distributed for cooling on the inner surfaces **(17.1)** of the pressing element **(11)**

13. Method according to claim 12 for producing a parison **(1.1)** using a blank mould baffle pressing system **(9)** according to claim 9 or 10, **characterized in that** while the blank mould baffle pressing system **(9)** performs a vertical closing movement by being lowered from above into the blank mould **(2)** and as long as the piston **(9.1)** is not yet subjected to gas pressure, the piston **(9.1)** is pressed vertically upwards against a preferably integrated stop surface **(9.3)** by means of the springs **(9.2)** of the blank mould baffle pressing system **(9)** and thus held in loading position.

14. Method according to claim 13 for producing a parison **(1.1)** using a blank mould baffle pressing system **(9)** according to claim 10, **characterized in that** while the blank mould baffle pressing system **(9)** performs a vertical closing movement by being lowered from above into the blank mould **(2),** the pressing element **(10)** is axially aligned at the upper funnel guide **(10.1)** and through the slide bearing **(12)** before the lower guide diameter **(10.2)** of the pressing element **(10)** dips into the blank mould profile **(11)** to prevent a pressing element edge **(13)** from tilting with the blank mould profile **(11).**

## Revendications

1. Système de pressage de fond de moule ébaucheur (9) pour la formation d'une entrée d'embouchure sans bavure d'un récipient en verre à fabriquer, qui comprend un piston (9.1) actionné par l'alimentation en pression de gaz, de préférence de l'air comprimé (18), et un élément de pressage (10) avec un profil d'élément de pressage (10.3), le piston (9.1) amenant, lorsqu'il est soumis à une pression de gaz d'un côté, le système de pressage de moule ébaucheur (9) en position de pressage contre une gouttes de verre (1) à former dans un moule ébaucheur (2), et préformant un fond pour le récipient en verre à produire lors du contact du profil de l'élément de pressage (10.3) avec la goutte de verre (1), **caractérisé par le fait que** le système de pressage de fond de moule ébaucheur (9) comprend un contrôle ou régulation de la course du piston (9.1), qui sert à compenser les fluctuations de masse de la gouttes de verre (1), le système pressage de fond de moule ébaucheur (9) ayant un dispositif de refroidissement interne pour le refroidissement au moyen d'un fluide de refroidissement

2. Système de pressage de fond de moule ébaucheur (9) pour la formation d'une entrée d'embouchure sans bavure d'un récipient en verre à fabriquer selon la revendication 1, **caractérisé en ce que** le dispositif de refroidissement interne pour le refroidissement comporte un moyen de distribution ciblée de refroidissement sur les surfaces intérieures (17.1) de l'élément de pressage (10).

3. Système de pressage de fond de moule ébaucheur (9) pour la formation d'une entrée d'embouchure sans bavure d'un récipient en verre à fabriquer selon la revendication 1 ou 2, **caractérisé en ce que** le moyen de distribution ciblée du fluide de refroidissement sur les surfaces intérieures (17.1) de l'élément de pressage (10) comporte une conduite d'alimentation en fluide de refroidissement (16) pour l'air de soufflage de fixe d'une machine à verre comme air comprimé pour le refroidissement dans le piston (9.1).

4. Système de pressage de fond de moule ébaucheur (9) pour la formation d'une entrée d'embouchure sans bavure d'un récipient en verre à fabriquer selon la revendication 1 ou 2 ou 3, **caractérisé en ce que** le moyen de distribution ciblée du fluide de refroidissement sur les surfaces intérieures (17.1) de l'élément de pressage (10) comporte un tube de refroidissement (9.5) disposé dans le piston (9.1).

5. Système de pressage de fond de moule ébaucheur (9) pour la formation d'une entrée d'embouchure sans bavure d'un récipient en verre à fabriquer selon la revendication 3 ou 4, **caractérisé en ce que** le fluide de refroidissement est séparé de la zone de travail (22) du piston (9.1) par un ensemble d'étanchéité (24) inséré au niveau de la conduite d'alimentation en fluide de refroidissement (16).

6. Système de pressage de fond de moule ébaucheur (9) pour la formation d'une entrée d'embouchure sans bavure d'un récipient en verre à fabriquer selon l'une des revendications 1 à 5, **caractérisé en ce que** le profil de l'élément de pressage (10.3) présente une géométrie convexe ou concave courbée vers la goutte de verre (1).

7. Système de pressage de fond de moule ébaucheur (9) pour la formation d'une entrée d'embouchure sans bavure d'un récipient en verre à fabriquer selon l'une des revendications 1 à 6, **caractérisé en ce que** l'élément de pressage (10) est fixé au piston (9.1) au moyen d'une liaison amovible.

8. Système de pressage de fond de moule ébaucheur (9) pour la formation d'une entrée d'embouchure sans bavure d'un récipient en verre à fabriquer selon la revendication 7, **caractérisé en ce qu'**un filetage (9.8) sert de liaison détachable.

9. Système de pressage de fond de moule ébaucheur (9) pour la formation d'une entrée d'embouchure sans bavure d'un récipient en verre à fabriquer selon l'une des revendications 1 à 8, **caractérisé en ce que** le système de pressage de fond de moule ébaucheur (9) comprend des ressorts (9.2) qui pressent l'élément de pressage (10) vers le haut contre une surface de butée (9.3) de préférence intégrée et le maintiennent ainsi dans la position de chargement tant que le piston (9.1) n'est pas soumis à une pression de gaz.

10. Système de pressage de fond de moule ébaucheur (9) pour la formation d'une entrée d'embouchure sans bavure d'un récipient en verre à fabriquer selon l'une des revendications 1 à 9, **caractérisé en ce que** le système de pressage de fond de moule ébaucheur (9) comprend un palier lisse (12) et un guide d'entonnoir (10.1) fixé en haut dans le moule ébaucheur (2), qui guident le piston (9.1) avec l'élément de pressage (10) axialement par rapport au profil de moule ébaucheur (11) avant que l'élément de pressage (10) ne plonge dans le profil de moule ébaucheur (11).

11. Procédé de fabrication d'une paraison (1.1) à l'aide d'un système de pressage de fond de moule ébaucheur (9) selon l'une des revendications 1 à 10, dans lequel
a) - de préférence à partir d'un dispositif d'alimentation - une goutte de verre (1) est chargée par le haut dans un moule ébaucheur (2), et
b) un outil plongeur (4) est positionné dans une position de chargement (8) servant de limite de chute pour le chargement de la goutte de verre (1) à l'extrémité inférieure du moule ébaucheur (2),
c) le système de pressage de fond de moule ébaucheur (9) effectue un mouvement de fermeture vertical en étant déplacé par le haut dans le moule ébaucheur (2) jusqu'à ce qu'une butée (14) du système de pressage de fond de moule ébaucheur (9) atteigne une surface de butée (15) sur le moule ébaucheur (2), le piston (9.1) n'étant initialement pas soumis à la pression du gaz, mais étant ensuite soumis à la pression du gaz peu avant ou au moment d'atteindre la surface de butée (15) et ainsi pressé vers le bas jusqu'à la surface de butée (15), l'élément de pressage (10) étant en position de pressage, et une compensation des fluctuations de masse de la goutte de verre (1) étant obtenue par une contrôle ou régulation de la course du piston,
d) pendant le mouvement de fermeture vertical du système de pressage de fond de moule ébaucheur (9), l'outil plongeur (4) est en outre pressé contre la paraison (1.1) se formant dans le moule ébaucheur (2) vers le haut contre l'élément de pressage (10) en position de pressage, jusqu'à ce que l'outil plongeur (4) et sa surface plongeante (4.1) viennent en butée contre une surface de anneau de couverture (6.1), contre laquelle il est pressé jusqu'à la fin du processus de pressage, et
e) après la fin du processus de pressage, un démoulage a lieu, l'outil plongeur (4) étant déplacé verticalement vers le bas, le système de pressage de fond de moule ébaucheur (9) étant entraîné verticalement vers le haut et le moule ébaucheur (2) étant ouvert, après quoi un transfert vers un poste de formage final peut avoir lieu,
où le système de pressage de fond de moule ébaucheur (9) est refroidi pendant la production de la paraison (1.1) au moyen d'un dispositif de refroidissement interne du système de pressage de fond de moule ébaucheur (9) avec un milieu de refroidissement, de préférence de l'air comprimé.

12. Procédé selon la revendication 11 pour la fabrication d'une paraison (1.1) à l'aide d'un système de pressage de fond de moule ébaucheur (9) selon l'une des revendications 2 à 10, **caractérisé en ce que** le fluide de refroidissement, de préférence de l'air de soufflage sous pression provenant d'une machine à verre, est distribué spécifiquement pour le refroidissement sur les surfaces intérieures (17.1) de l'élément de pressage (11).

13. Procédé selon la revendication 12 pour la fabrication d'une paraison (1.1) à l'aide d'un système de pressage de fond de moule ébaucheur (9) selon la revendication 9 ou 10, **caractérisé en ce que**, pendant que le système de pressage de fond de moule ébaucheur (9) effectue un mouvement vertical de fermeture en étant descendu par le haut dans le moule ébaucheur (2) et tant que le piston (9. 1) n'est pas encore soumis à la pression du gaz, le piston (9.1) est pressé verticalement vers le haut contre une surface de butée (9.3), de préférence intégrée, avec les ressorts (9.2) de système de pressage de fond de moule ébaucheur (9), et ainsi maintenu dans la position de chargement.

14. Procédé selon la revendication 13 pour la fabrication d'une paraison (1.1) à l'aide d'un système de pressage de fond de moule ébaucheur (9) selon la revendication 10, **caractérisé en ce que**, tandis que le système de pressage de fond de moule ébaucheur (9) effectue un mouvement de fermeture vertical en étant abaissé par le haut dans le moule ébaucheur (2), l'élément de pressage (10) est aligné axialement sur le guidage en entonnoir supérieur (10.1) et à travers le palier lisse (12) avant que le diamètre de guidage inférieur (10.2) de l'élément de pressage (10) ne plonge dans le profil de moule ébaucheur (11) pour empêcher un bord d'élément de pressage (13) de basculer avec le profil de moule ébaucheur (11).
